# EUROPEAN PATENT APPLICATION

(11) **EP 4 686 412 A1**
(43) Date of publication of application: **04.02.2026**
(21) Application number: 25382793.5
(22) Date of filing: 30.07.2025
(51) Int. Cl.: A22C 7/00

(54) **COMPRESSION WALL OF A MOULDING SYSTEM AND MOULDING SYSTEM**

(30) Priority: 30.07.2024 ES 202431464 U
(71) Applicant: Of Course Solutions, S.L., 17800 Olot Girona (ES)
(72) Inventor: Herrero Font, Jordi, 08036 Barcelona (ES)
(74) Representative: Isern Patentes y Marcas S.L.

(57) **Abstract**

The present invention relates to a compression wall of a moulding system for forming food products, capable of being positioned transversely with respect to the length of a counter-mould body and slidingly along the inside of the mould body (3), including first attachment means provided for cooperating in a complementary manner with second attachment means provided in the mould body, said wall comprises a base body having an oblong and prismatic configuration, having a longitudinal recess defining a housing in which a latch support cover and a pair of latch covers slidingly coupled to the latch support cover and to the base body are arranged in a releasable manner, wherein each of the latch covers comprises on a front face a protruding element capable of sliding through slots made in the latch support cover, each of the latch covers having an outward facing lateral end provided with the first attachment means.

## Description

### OBJECT OF THE INVENTION

The present application concerns the registration of a compression wall of a moulding system for forming food products, as well as a moulding system provided with said compression wall.

More specifically, the invention proposes the development of a compression wall of a moulding system for forming food products and of a moulding system that offers good qualities from a sanitary point of view, as well as a greater structural simplicity that facilitates and increases the useful life of the different portions of the moulding system.

### BACKGROUND OF THE INVENTION

Solutions for forming food products, such as moulding systems for cured meat products such as ham and the like, are known in the state of the art.

Document No ES 1065823 describes a counter-mould for forming food products, essentially comprising a counter-mould body having an oblong, tubular shape and a compression wall that can be displaced along the counter-mould body. Said compression wall is provided with a pair of fitted plates which are working in tension against the inner walls of the counter-mould body by the arrangement of elastic springs therebetween. These plates have a ratchet at one end that can be fitted into a toothed portion provided on the inner wall of the counter-mould body. It has been observed that this structural arrangement leads to increased wear of the plates due to the fact that the ratchet is always in contact with the toothed portion during its displacement, thus reducing the lifetime of the compression wall. Furthermore, due to its structural configuration, it is not designed for component replacement, so that the entire compression wall must be replaced once the ratchets are worn.

Document No. ES 2565103 is also known, which discloses a moulding system for forming food products comprising a moulding box having a counter-mould body having a tubular and elongated shape, defining at least a first recess, the counter-mould body being configured to receive a compression wall capable of being arranged transversely with respect to the length of the counter-mould body, and a mould body defining at least a second recess, the counter-mould body and the mould body being configured such that the counter-mould body is releasably linkable to the mould body within the second recess in a coupling condition. While this arrangement has proven to be suitable, it is noted that the counter-mould body may suffer increased wear due to the fact that the compression wall moves inside the counter-mould body.

Another drawback detected in the system described in ES 2565103 is located in the compression wall formed by different portions having complex shapes, not being provided to be easily disassembled for cleaning tasks of the compression wall, so there is an increased risk of food cross-contamination due to an accumulation of small debris in internal parts of the compression wall.

Furthermore, the applicant is currently unaware of any invention that has all of the features described in this specification.

### DESCRIPTION OF THE INVENTION

The present invention has been developed with the aim of providing a compression wall which is configured as a novelty within the field of application and solves the previously mentioned drawbacks, also contributing other additional advantages that will be obvious from the description below.

It is worth mentioning that in this specification, food product is understood as any product that can be edible for humans or animals and that can be formed with a mould.

It is therefore an object of the present invention to provide a compression wall of a moulding system for forming food products, capable of being housed transversely with respect to the length of a mould body and slidingly along the inside of the mould body, including first attachment means provided for cooperating in a complementary manner with second attachment means present in the mould body.

In particular, it is characterised in that it comprises a base body having an oblong and prismatic configuration, having a longitudinal recess defining a housing in which a latch support cover and a pair of latch covers, preferably aligned with each other, which are slidably coupled to the latch support cover and to the base body, are arranged in a releasable manner, wherein each of the latch covers comprises on a front face a protruding element such as a nipple capable of moving through independent slots made in the latch support cover, each of the latch covers having an outward facing lateral end provided with the first attachment means.

Preferably, the first attachment means consist of an extension protruding from a lateral face of the free end, with a wedge-shaped cross-section that is configured to come into contact with the second attachment means.

Also preferably, the aforementioned independent slots are L-shaped.

According to the invention, first guide means are provided which are configured for guided positioning by sliding the latch support cover in relation to the base body.

Preferably, the first guide means consist of at least a first groove running longitudinally and partially along the upper and/or lower wall of the longitudinal recess, in which a longitudinal projection provided in at least the upper and/or lower portion of the body forming the latch support cover is slidably coupled.

In addition, second guide means can be provided which are configured for guided positioning by sliding the latch covers in relation to the base body.

According to the invention, the second guide means consist of a second groove running longitudinally and partially along the upper wall of the longitudinal recess, in which a longitudinal projection provided in the upper portion of the latch cover is slidably coupled.

Preferably, the nipples are mushroom-shaped, so that the larger diameter portion is in contact with a recessed rolling portion running around each of the independent slots.

Advantageously, the base body, the latch covers and the latch support cover are made of an injectable plastic material, which facilitates the construction process of the compression wall and leads to a reduction in manufacturing costs compared to other manufacturing techniques.

Due to these features, a compression wall having a simple structural configuration is obtained, where it is easy to disassemble the different portions that make it up, for example, to carry out cleaning tasks or to replace damaged or worn parts. This also avoids the need to replace the entire compression wall if only one of its constituent parts needs to be replaced.

In addition, another advantageous aspect is the fact that there are no elastic springs, i.e. no metal components, and the first attachment means can only act when displacement of the compression wall is required, thus reducing wear on the portions or parts involved in the displacement.

It is another object of the present invention to provide a moulding system for forming food products comprising a moulding box having a counter-mould body having a tubular and elongated shape, defining at least a first recess, and a mould body defining at least a second recess, the counter-mould body and the mould body being configured such that the counter-mould body is releasably linkable to the mould body within the second recess in a coupling condition, the mould body being configured to receive a compression wall capable of being arranged transversely to the length of the mould body and slidably along the second recess.

In particular, the moulding system comprises a compression wall as described above, wherein first attachment means provided in the compression wall cooperate in a complementary manner with second attachment means provided in the mould body, so that in a first operative position the first and second attachment means are coupled to each other, while in a second operative position the first and second attachment means are decoupled from each other.

According to the system of the invention, the second attachment means comprise a longitudinal portion with multiple saw teeth, which partially extends along a part of the length of the inner face of two facing lateral walls of the mould body.

In addition, the mould body comprises a sealable mouth arranged at an end opposite to a receiving end of the counter-mould body, which includes a sliding closing cover for easy placement and removal.

In another feature of the invention, the counter-mould body and the mould body have a prismatic shape with rounded corners, prismatic being understood as being able to adopt a cross-section with any suitable geometrical shape.

To ensure safe food handling, the counter-mould body, mould body and compression wall are made of food grade material.

The mould body may be made with thicker walls than the counter-mould body, which properly withstand the forming operations for forming the food product. As it does not have to be machined, this mould body has a longer service life than other known moulds and can therefore be used in a larger number of forming operations.

Due to this moulding system, the compression wall is located outside the counter-mould body, thus preventing premature wear of the counter-mould body.

Other features and advantages of the moulding system object of the present invention will become apparent from the description of a preferred, but not exclusive, embodiment which is illustrated by way of non-limiting example in the attached drawings, in which:

### BRIEF DESCRIPTION OF THE DRAWINGS

Figure 1 is an isometric view of a preferred embodiment of the moulding system according to the invention;
Figure 2 is an isometric view of a mould body forming part of the moulding system of the invention;
Figure 3 is an isometric view of a counter-mould body forming part of the moulding system of the invention;

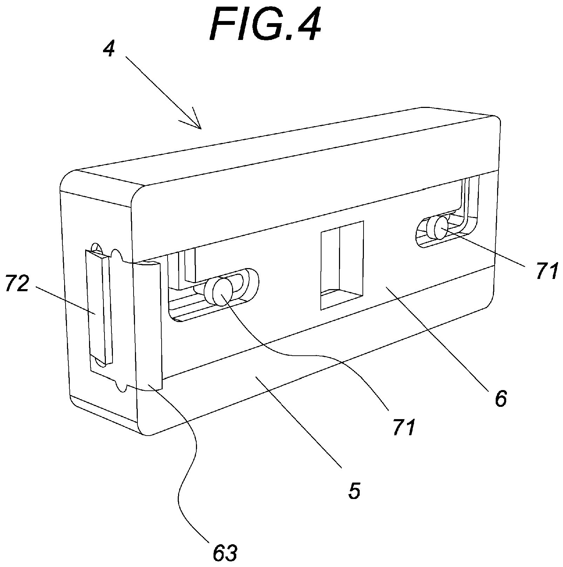

Figure 4 is an isometric view of an embodiment of the compression wall in accordance with the present invention;

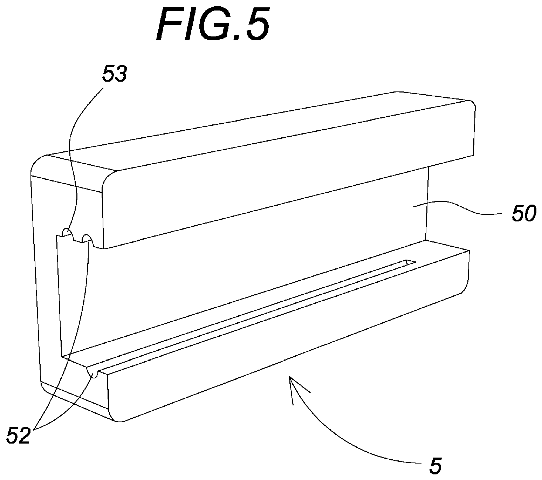

Figure 5 is an isometric view of the base body forming part of the compression wall depicted in figure 4;
Figure 6 is an isometric view of the latch support cover forming part of the compression wall depicted in figure 4;
Figure 7 is an isometric view of a latch cover forming part of the compression wall depicted in Figure 4; and
Figure 8 is an isometric view of a sliding cover forming part of the moulding system.

### DESCRIPTION OF A PREFERRED EMBODIMENT

In view of the aforementioned figures, and in accordance with the adopted numbering, a preferred exemplary embodiment of the invention is disclosed, which comprises the parts and elements indicated and described in detail below.

Moreover, the terms upper, lower, up, down, and the like in the description and in the claims are used for descriptive purposes and not necessarily to describe relative positions.

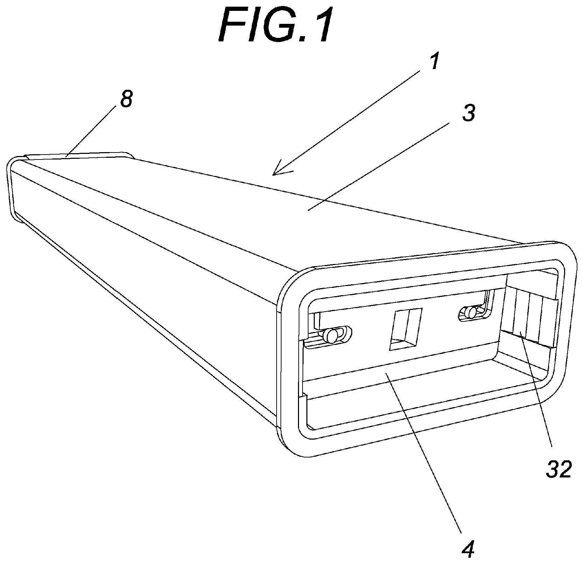

Figure 1 shows a moulding system for forming food products which, by way of non-exclusive example, is pork ham, but may be any other food product with at least a partial meat, cheese or fish content, said system being based on the arrangement of a moulding box (1). For reasons of clarity, the foodstuff is not depicted in the drawings.

The moulding box (1) has a counter-mould body (2) having a tubular and elongated shape, defining at least a first recess (20), and a mould body (3) defining at least a second recess (30), the counter-mould body and the mould body being configured such that the counter-mould body is releasably linkable to the mould body (3) within the second recess (30) in a coupling condition.

Furthermore, the moulding box (1) is provided with a compression wall (4) capable of being arranged transversely with respect to the length of the mould body (3) and slidably along the second recess (30) wherein first attachment means (described in more detail below) provided on the compression wall (4) cooperate in a complementary manner with second attachment means provided on the mould body (3) so that in a first operative position the first and second attachment means are coupled to each other, while in a second operative position the first and second attachment means are decoupled from each other.

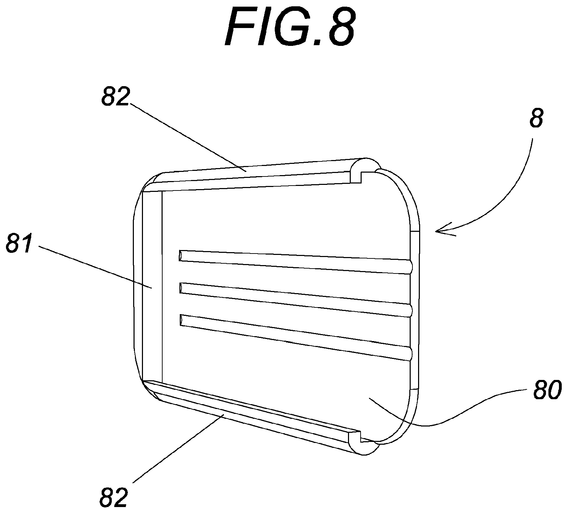

The mould body (3) comprises a sealable mouth arranged at an end opposite to a receiving end of the counter-mould body (2), which includes a sliding closing cover (8). As can be seen in Figure 8, the sliding closing cover (8) comprises a rectangular shaped central section (80) with a lateral stop projection (81), while the upper and lower portion of the central section (80) is provided with an extension (82) which acts as a guide rail for the sliding engagement of a protruding flange (81) provided at the end of the mould body (3).

It should be noted that the sliding closing cover (8) mentioned above can also be placed at the opposite end of the mould body (3) to the receiving end.

Both the counter-mould body (2) and the mould body (3) have a prismatic shape with rounded corners and their dimensions are proportionate to each other for their coupling.

Preferably, the counter-mould body (2), the mould body (3) and the compression wall (4) are made of a food-grade material, being any material that meets said condition, for example, of plastic type, which withstand noticeable temperature gradients, and with a notorious degree of strength for the usual compression of foods.

More precisely, the compression wall (4) that moves along the mould body (3) comprises a base body (5) having an oblong and prismatic configuration, which has a longitudinal recess (50) in the central portion that defines a housing where a latch support cover (6) and a pair of latch covers (7) aligned with each other and slidably coupled to the latch support cover (6) and to the base body (5) are arranged in a releasable manner.

The base body (5), the latch covers (7) and the latch support cover (6) are made of an injectable plastic material.

Each of the latch covers (7) comprises on a front face (70) a nipple (71) capable of moving through independent L-shaped slots (60) made in the latch support cover (6), the independent slots (60) of which are symmetrically arranged with respect to a central axis of the latch support cover (6), thus allowing the adjustment in position of the latch covers (7) with respect to the distance from the inner wall of the mould body (3).

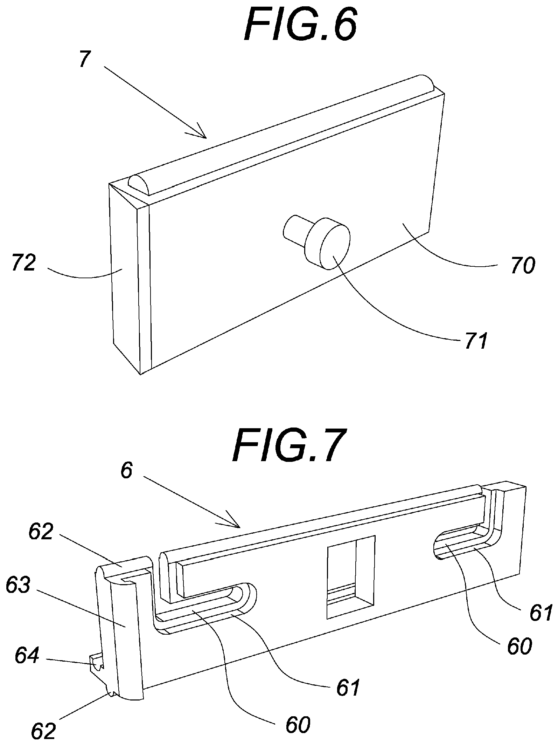

As shown in Figure 6, each of the latch covers (7) has an outward facing end which is provided with the first attachment means, which consist of an extension (72) protruding from a lateral face of the free end, with a wedge-shaped cross-section which is configured to come into contact with the second attachment means described below.

The nipples (71) are mushroom-shaped so that the larger diameter portion is in contact with a recessed rolling portion (61) running around each of the independent slots (60).

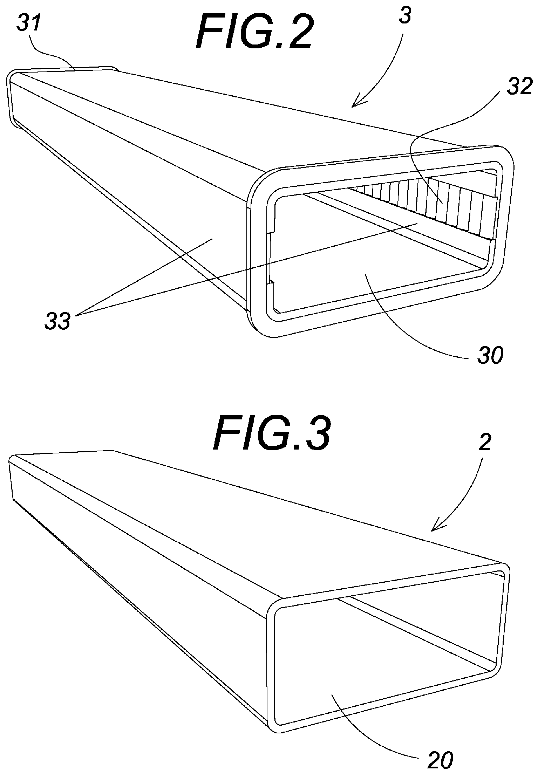

Referring now to the second attachment means provided on the mould body (3), they comprise a longitudinal portion with multiple saw teeth (32), which partially extends along a part of the length of the inner face of two facing lateral walls (33) of the mould body (3), as can be seen in figures 1 and 2.

In addition, in order to ensure correct assembly of the compression wall (4), first guide means are provided, configured for guided positioning by sliding of the latch support cover (6) in relation to the base body (5). Such first guide means consist of grooves (52) running longitudinally and partially along the upper and lower wall of the longitudinal recess (50) of the base body (5), in which a series of longitudinal projections (62) provided in the upper and lower portion of the body forming the latch support cover (6) are slidably and removably coupled.

To facilitate manual removal of the latch support cover (6) from the base body (5) a grip tab (63) is provided at one lateral end of the body forming the latch support cover (6).

Also provided are second guide means configured for the guided positioning by sliding of the latch covers (7) in relation to the base body (5), consisting of a second groove (53) running longitudinally and partially along the upper wall of the longitudinal recess of the base body (5), in which a longitudinal projection (73) provided in the upper portion of the latch cover (7) and a second longitudinal projection (64) on the lower portion of the latch support cover (6) are slidably coupled.

The details, shapes, dimensions and other accessory elements, used to manufacture the moulding system for forming products of the invention, may be suitably substituted for others which do not depart from the scope defined by the claims which are included below.

## Claims

1. A compression wall (4) of a moulding system for forming food products, capable of being positioned transversely with respect to the length of a counter-mould body (2) and slidingly along the inside of the mould body (3), including first attachment means provided for cooperating in a complementary manner with second attachment means provided in the mould body (3), **characterised in that** it comprises a base body (5) having an oblong and prismatic configuration, having a longitudinal recess (50) defining a housing in which a latch support cover (6) and a pair of latch covers (7) slidingly coupled to the latch support cover and to the base body (5) are arranged in a releasable manner, wherein each of the latch covers (7) comprises on a front face a protruding element capable of sliding through slots made in the latch support cover (6), each of the latch covers (7) having an outward facing lateral end provided with the first attachment means.

2. The compression wall (4) according to claim 1, **characterised in that** the first attachment means consist of an extension (72) protruding from a lateral face of the free end of the latch cover (7), with a wedge-shaped cross-section which is configured to protrude outside the base body (5) and come into contact with the second attachment means provided in the mould body (3).

3. The compression wall (4) according to claim 1, **characterised in that** the slots are L-shaped.

4. The compression wall (4) according to claim 1, **characterised in that** the first guide means are provided configured for the guided positioning by sliding of the latch support cover in relation to the base body.

5. The compression wall (4) according to claim 4, **characterised in that** the first guide means consist of at least a first groove running longitudinally and partially along the upper and/or lower wall of the longitudinal recess, in which a longitudinal projection provided in at least the upper and/or lower portion of the body forming the latch support cover is slidably coupled.

6. The compression wall (4) according to any one of claims 1 to 5, **characterised in that** second guide means are provided configured for the guided positioning by sliding of the latch covers (7) in relation to the base body (5).

7. The compression wall (4) according to claim 6, **characterised in that** the second guide means consist of a second groove running longitudinally and partially along the upper wall of the longitudinal recess of the base body (5), in which a longitudinal projection provided in the upper portion of the latch cover (7) is slidably coupled.

8. The compression wall (4) according to claim 1, **characterised in that** the nipples (71) are mushroom-shaped, so that the larger diameter portion is in contact with a recessed rolling portion running around each of the independent slots (60).

9. The compression wall (4) according to any of claims 1 to 8, **characterised in that** the base body (5), the latch covers (7) and the latch support cover (6) are made of an injectable plastic material.

10. A moulding system for forming food products comprising a moulding box (1) having a counter-mould body (2) having a tubular and elongated shape, defining at least a first recess, and a counter-mould body (3) defining at least a second recess, the counter-mould body (2) and the mould body (3) being configured such that the counter-mould body is releasably linkable to the mould body (3) within the second recess in a coupling condition, the mould body (3) being configured to receive a compression wall capable of being arranged transversely to the length of the mould body and slidably along the second recess, **characterised in that** it comprises a compression wall (4) according to any of claims 1 to 9, wherein first attachment means provided in the compression wall cooperate in a complementary manner with second attachment means provided in the mould body, so that in a first operative position the first and second attachment means are coupled to each other, while in a second operative position the first and second attachment means are decoupled from each other.

11. The moulding system according to claim 10, **characterised in that** the second attachment means comprise a longitudinal portion with multiple saw teeth (32), which partially extends along a part of the length of the inner face of two facing lateral walls of the mould body (3).

12. The moulding system according to claim 10, **characterised in that** the mould body (3) comprises a sealable mouth arranged at an end opposite to a receiving end of the counter-mould body (2), which includes a sliding closing cover (8).

13. The moulding system according to claim 10, **characterised in that** the counter-mould body (2) and the mould body (3) have a prismatic shape with rounded corners.

14. The moulding system according to any of claims 10 to 13, **characterised in that** the counter-mould body, the mould body and the compression wall are made of a food-grade material.
